# EUROPÄISCHE PATENTSCHRIFT

(11) **EP 1 500 674 B1**
(45) Veröffentlichungstag und Bekanntmachung des Hinweises auf die Patenterteilung: **26.04.2006**
(21) Anmeldenummer: 04015068.2
(22) Anmeldetag: 26.06.2004
(51) Int. Cl.: C08K 3/00, B32B 11/04, E04D 5/10, E04D 5/12

(54) **Bitumenbahn**
Bituminous sheet
Bande bitumineuse

(30) Priorität: 11.07.2003 DE 10331498
(43) Veröffentlichungstag der Anmeldung: 26.01.2005
(73) Patentinhaber: Paul Bauder GmbH & Co. KG, 70499 Stuttgart (DE)
(72) Erfinder: Bauder, Gerhard, 70499 Stuttgart (DE)
(74) Vertreter: Hoeger, Stellrecht & Partner Patentanwälte

(56) Entgegenhaltungen:
- EP-A- 0 426 179
- US-A- 5 658 972

## Beschreibung

Die Erfindung betrifft eine Bitumenbahn mit einem flächigen Träger, der zumindest einseitig mit einer Bitumenbeschichtung versehen ist.

Derartige Bitumenbahnen werden in vielfältiger Weise zu Abdichtungszwecken eingesetzt, beispielsweise als Dachabdichtungsbahnen. Dabei geht die Tendenz dahin, daß diese Bahnen immer dünner werden. Es hat sich dabei herausgestellt, daß sich insbesondere bei dünnen Bahnen Probleme hinsichtlich der Entzündbarkeit bei niederen Temperaturen ergeben können. Je dicker Bitumenbahnen sind, desto kleiner ist das Oberflächen-zu-Massen-Verhältnis, und damit wird die Entzündbarkeit bei niederen Temperaturen erschwert. Umgekehrt nimmt dieses Verhältnis bei dünner werdenden Bahnen zu, und dies führt dazu, daß derartige Bahnen relativ leicht entzündet werden können.

Es gibt Normen, durch die die Entzündbarkeit derartiger Bitumenbahnen bei relativ niederen Temperaturen feststellbar ist, beispielsweise in den deutschen Brandschutznormen wird mit einem sogenannten B2-Test die Entzündbarkeit geprüft. Es besteht Interesse daran, die Bitumenbahnen so auszugestalten, daß sie möglichst schwer entzündbar sind, und dies soll auch insbesondere bei dünnen Bitumenbahnen der Fall sein.

Beispielsweise ist es bei Bitumenbahnen bekannt, als Flammschutzmittel dem Bitumen Ammoniumphosphate oder halogenierte Phosphorverbindungen zuzusetzen (DE 197 55 224 A1) oder Graphit, Stärke plus Penthaerythrit oder Dicyandiamid oder Diammoniumphosphat (DE 44 04 844 A1). EP-A-426 179 beschreibt eine flammhemmende Asphaltzusammensetzung, die 15-40 Gew.-% flammhemmendes Mittel enthält, wobei das flammhemmende Mittel 65-95 Gew.-% Ammoniumsulfat aufweist. Während diese Zugaben von flammhemmenden Substanzen bei dickeren Bitumenschichten zu den gewünschten flammhemmenden Eigenschaften führen, ist dies bei dünneren Bitumenbahnen nicht ausreichend, um ein flammhemmendes Verhalten zu erreichen, da durch das größere Oberflächen-zu-Massen-Verhältnis die Entzündbarkeit bei niederen Temperaturen erhöht wird.

Dementsprechend ist es Aufgabe der Erfindung, eine gattungsgemäße Bitumenbahn so auszustatten, daß ihre Entzündbarkeit bei niederen Temperaturen herabgesetzt wird.

Diese Aufgabe wird bei einer Bitumenbahn der eingangs beschriebenen Art erfindungsgemäß dadurch gelöst, daß die Bitumenbeschichtung 10 bis 50 Gew.% Ammoniumbromid enthält, vorzugsweise 20 bis 40 Gew.%. Es hat sich überraschenderweise herausgestellt, daß ein derartiger Ammoniumbromidzusatz zu der die Beschichtung aufbauenden Bitumendeckmasse die Entzündbarkeit deutlich herabsetzt, insbesondere gilt dies bei dünnen Bitumenbahnen. Offenbar weist das Ammoniumbromid bei der Beanspruchung durch eine relativ kleine Flamme, die bei der Durchführung der Entzündbarkeitsprüfung verwendet wird, ein besonders wirksames Brandschutzverhalten auf.

An sich ist Ammoniumbromid als flammhemmender Zusatz bereits bekannt, jedoch nur als Zusatz zu bestimmten organischen Substanzen, beispielsweise offenzelligem, vernetztem Polyolefinschaum (DE 41 21 831 C2), Polymermischungen zur Herstellung von Kunststoffflaschen auf der Basis von modifiziertem Polyester (DE 199 46 323 A1) oder alkenylaromatischen Polymerisaten (DE 1 251 946 A). Dabei handelt es sich in allen Fällen um unpolare Substanzen.

Bitumen hingegen ist ein Stoffgemisch mit vielen polaren Verbindungen (zyklische Verbindungen mit Heteroatomen wie Stickstoff und Schwefel, metallionenstabilisierte anionische und kationische Verbindungen). Überraschenderweise hat es sich herausgestellt, daß die polaren Verbindungen des Bitumens das Ammoniumbromid so stabilisieren, daß die Dissoziation des Ammoniumbromids - und damit die eigentlich flammhemmende Wirkung - bei einer um einige 10-Grad höheren Temperatur erfolgt, beispielsweise einer Temperatur, die um 20 bis 50 Grad über der Dissoziationstemperatur des freien Ammoniumbromids liegt.

Der Flammpunkt üblicher Bitumenbeschichtungen liegt bei Temperaturen zwischen etwa 250 bis 320 °C. Freies Ammoniumbromid dissoziiert bei Temperaturen von etwa 280 °C. Die Erhöhung der Dissoziationstemperatur des Ammoniumbromids durch die Einbettung in die Bitumenmasse führt dazu, daß die Dissoziationstemperatur des als Flammschutzmittel zugegebenen Ammoniumbromids in Bereiche verschoben wird, die geringfügig oberhalb der Entflammtemperatur des Bitumens liegt. Man kann also eine in dieser Weise beschriebene Bitumenbahn bis zum Flammpunkt des Bitumens erwärmen, ohne daß eine Dissoziation des zugesetzten Ammoniumbromids einsetzt, erst bei der tatsächlichen Entflammung des Bitumens wird dann durch die damit verbundene Temperatursteigerung das Ammoniumbromid dissoziieren und damit flammhemmend wirken.

Damit ist die Gefahr ausgeräumt, daß bereits bei Temperaturen unter der Entflammtemperatur des Bitumens die Dissoziation des flammhemmenden Ammoniumbromids einsetzt und dieses Flammschutzmittel dadurch "verbraucht" wird, erst bei einer tatsächlichen Entflammung des Bitumens wird die flammhemmende Wirkung des Ammoniumbromids einsetzen, und zwar aufgrund der Nähe der Dissoziationstemperatur zur Entflammtemperatur unverzüglich beim Auftreten einer Flamme. Auf diese Weise ergibt sich ein sehr sicherer und unmittelbar nach Auftreten einer Flamme wirksamer Flammschutz.

Eine in dieser Weise ausgebildete Bitumenbahn kann die unterschiedlichsten Träger verwenden, die an sich bekannt sind, beispielsweise kann der flächige Träger aus einem Glas- oder Kunststoffvlies, einem Glas- oder Kunststoffgewebe, einer Kombination von beidem, einer Aluminiumfolie oder einem Verbundträger aus Aluminium und Polyethylen-, Polypropylen- oder Polyesterfolienverbund bestehen.

Der Träger kann einseitig oder beidseitig mit einer Bitumenbeschichtung versehen sein, bei einem gewebeartigen Träger ist auch eine Umhüllung des Trägers denkbar.

Günstig ist es, wenn auf den Außenseiten der Bitumenbahn entweder eine mineralische Abstreuung oder eine Abdeckung angeordnet ist, beispielsweise mittels eines Kunststoffvlieses oder einer Kunststoffolie.

Als Bitumenmassen kommen alle Bitumenmassen in Frage, die üblicherweise bei Bitumenbahnen zu Dichtungszwecken Einsatz finden, besonders vorteilhaft sind Bitumenmassen des Typs 160/220 oder 85/25.

Den Bitumenmassen können neben dem Ammoniumbromidzusatz weitere Zusätze beigefügt sein, beispielsweise ein Zusatz von Styrol-Butadien-Styrol-Kautschuk (SBS), beispielsweise in Anteilen von 5 bis 20 Gew.% der gesamten Bitumenmasse, insbesondere im Bereich von 10 bis 15 Gew.%. Weiterhin können Fabrikationsöl, beispielsweise mit einem Gewichtsanteil von 2 bis 8 Gew.%, oder Harze zugefügt werden in einem Gewichtsanteil von 0 bis 7 Gew.%, in anderen Fällen können Zusätze von ataktischem Polypropylen (APP) eingesetzt werden in Gewichtsanteilen von 15 bis 25 Gew.% und/oder isotaktisches Polypropylen (IPP) in Gewichtsanteilen von 0 bis 5 Gew.%. Auch andere herkömmliche Zusatzstoffe zu derartigen Bitumenbeschichtungen sind einsetzbar, sofern der in dieser Weise zubereiteten Bitumenmasse ein Anteil von Ammoniumbromid in der genannten Größenordnung beigefügt ist.

Besonders vorteilhaft ist die beschriebene Schutzwirkung gegen Entzündbarkeit bei relativ dünnen Bitumenbahnen, beispielsweise bei Bitumenbahnen mit einem Flächengewicht von maximal 1,5 kg/m².

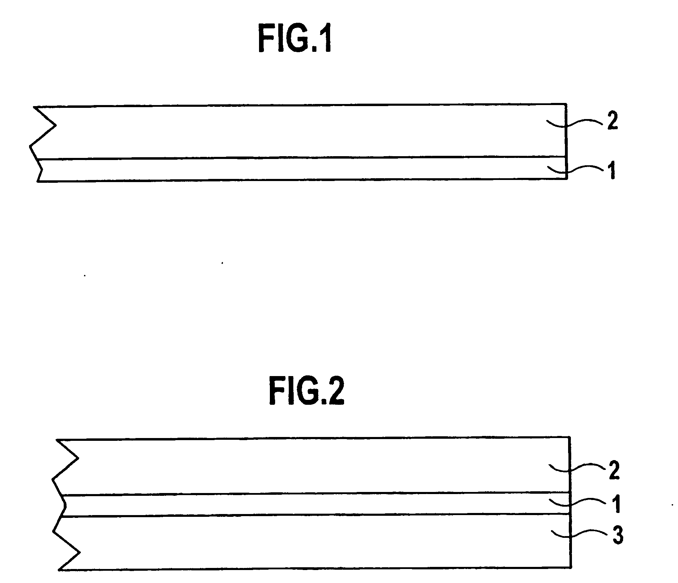

In Figur 1 ist als Beispiel einer derartigen Bitumenbahn eine Bitumenbahn dargestellt mit einem flächigen Träger 1, der einseitig mit einer Bitumenbeschichtung 2 versehen ist, in Figur 2 ist der Träger 1 nicht nur einseitig mit einer Bitumenbeschichtung 2 versehen, sondern auf der gegenüberliegenden Seite mit einer weiteren Bitumenbeschichtung 3, wobei die Bitumenbeschichtungen 2 und 3 eine einheitliche Schicht darstellen können, in die der Träger 1 eingebettet ist.

In der Zeichnung nicht dargestellt sind Abdeckungen auf der Außenseite der Bitumenbeschichtung, die in herkömmlicher Weise beispielsweise als Mineralabstreuung ausgebildet sein können oder durch Kunststoffvliese oder Kunststoffolien gebildet werden, die außenseitig auf die Bitumenbeschichtung aufgelegt und mit dieser flächig verbunden sind.

Nachstehend werden einige Beispiele für die Zusammensetzung der Bitumenbeschichtung 1, 3 angegeben:

### Beispiel 1

| | |
|---|---|
| Bitumen 160/220 | 50 - 80 Gew.% |
| SBS (Styrol-Butadien-Styrol-Kautschuk) | 5-20 Gew.% |
| Fabrikationsöl | 2 - 8 Gew.% |
| Harz | 0-7 Gew.% |
| Ammoniumbromid | 15 - 35 Gew.% |

### Beispiel 2

| | |
|---|---|
| Bitumen 160/220 | 50 - 70 Gew.% |
| SBS (Styrol-Butadien-Styrol-Kautschuk) | 10 - 15 Gew.% |
| Ammoniumbromid | 20 - 40 Gew.% |

### Beispiel 3

| | |
|---|---|
| Bitumen 160/220 | 40 - 60 Gew.% |
| APP - ataktisches Polypropylen | 15 - 25 Gew.% |
| IPP - isotaktisches Polypropylen | 0 - 5 Gew.% |
| Ammoniumbromid | 20 - 40 Gew.% |

### Beispiel 4

| | |
|---|---|
| Bitumen 85/25 | 70 - 85 Gew.% |
| Ammoniumbromid | 15 - 30 Gew.% |

Mit den folgenden Zusammensetzungen sind Vergleichsversuche angestellt worden. In beiden Fällen ist ein beidseitig mit Bitumen beschichteter Träger verwendet worden, wobei eine Seite der Bahn mit einem Aluminium-Polyesterfolienverbund abgedeckt ist. Als Träger ist ein Polyester-Gitterträger mit einem Flächengewicht von 62 g/m² verwendet worden, das Flächengewicht des Aluminium-Polyesterfolienverbundes betrug 72 g/m², das Flächengewicht der Bitumenbeschichtung 600 g/m².

### Beispiel 5 (nicht flammgeschützte Variante)

| | |
|---|---|
| Bitumen 160/220 | 80 Gew.% |
| SBS-Kautschuk | 14 Gew.% |
| Harz | 6 Gew.% |

### Beispiel 6 (flammgeschützte Variante)

| | |
|---|---|
| Bitumen 160/220 | 56 Gew.% |
| SBS-Kautschuk | 10 Gew.% |
| Harz | 4 Gew.% |
| Ammoniumbromid | 30 Gew.% |

Die Entzündbarkeit ist mittels des B2-Testes durchgeführt worden, dabei wird ein Probenstück an der unteren Kante mit einer definierten Flamme beflammt, und nach 20 Sekunden wird die Flammhöhe gemessen. Bei der nicht flammgeschützten Variante (Beispiel 5) wurde eine Flammhöhe von 20 Zentimeter deutlich überschritten, 20 Zentimeter ist dabei die Grenze der Testapparatur. Bei der flammgeschützten Variante (Beispiel 6) wurde nur eine Flammhöhe von 11 Zentimeter erreicht.

## Patentansprüche

1. Bitumenbahn mit einem flächigen Träger, der zumindest einseitig mit einer Bitumenbeschichtung versehen ist, **dadurch gekennzeichnet, daß** die Bitumenbeschichtung (1, 3) 10 bis 50 Gew.% Ammoniumbromid enthält.

2. Bitumenbahn nach Anspruch 1, **dadurch gekennzeichnet, daß** der Anteil an Ammoniumbromid in der Bitumenbeschichtung (1, 3) 20 bis 40 Gew.% beträgt.

3. Bitumenbahn nach einem der voranstehenden Ansprüche, **dadurch gekennzeichnet, daß** die Bitumenbeschichtung (1, 3) als weitere Zusätze Styrol-Butadien-Styrol-Kautschuk (SBS) enthält.

4. Bitumenbahn nach Anspruch 3, **dadurch gekennzeichnet, daß** der Anteil an Styrol-Butadien-Styrol-Kautschuk zwischen 5 und 20 Gew.% liegt.

5. Bitumenbahn nach einem der voranstehenden Ansprüche, **dadurch gekennzeichnet, daß** die Bitumenbeschichtung (1, 3) als weitere Zusätze Fabrikationsöl enthält.

6. Bitumenbahn nach einem der voranstehenden Ansprüche, **dadurch gekennzeichnet, daß** die Bitumenbeschichtung (1, 3) als weitere Zusätze Harz enthält.

7. Bitumenbahn nach Anspruch 6, **dadurch gekennzeichnet, daß** der Anteil an Harz zwischen 0 und 7 Gew.% liegt.

8. Bitumenbahn nach einem der Ansprüche 1 oder 2, **dadurch gekennzeichnet, daß** die Bitumenbeschichtung (1, 3) als weitere Zusätze ataktisches Polypropylen (APP) enthält.

9. Bitumenbahn nach Anspruch 8, **dadurch gekennzeichnet, daß** der Anteil an ataktischem Polypropylen zwischen 15 und 25 Gew.% liegt.

10. Bitumenbahn nach einem der Ansprüche 8 oder 9, **dadurch gekennzeichnet, daß** die Bitumenbeschichtung (1, 3) isotaktisches Polypropylen (IPP) enthält.

11. Bitumenbahn nach Anspruch 10, **dadurch gekennzeichnet, daß** der Anteil an isotaktischem Polypropylen zwischen 0 und 5 Gew.% liegt.

12. Bitumenbahn nach einem der voranstehenden Ansprüche, **dadurch gekennzeichnet, daß** die Bitumenbeschichtung (1, 3) Bitumen des Typs 160/220 enthält.

13. Bitumenbahn nach einem der Ansprüche 1 bis 11, **dadurch gekennzeichnet, daß** die Bitumenbeschichtung (1,3) Bitumen des Typs 85/25 enthält.

14. Bitumenbahn nach einem der voranstehenden Ansprüche, **dadurch gekennzeichnet, daß** das Flächengewicht der Bitumenbahn maximal 1,5 kg/m² beträgt.

15. Bitumenbahn nach einem der voranstehenden Ansprüche, **dadurch gekennzeichnet, daß** der Träger (2) beidseitig mit einer derartigen Bitumenbeschichtung (1, 3) versehen ist.

16. Bitumenbahn nach einem der Ansprüche 1 bis 5, **dadurch gekennzeichnet, daß** der Träger (2) allseits von einer derartigen Bitumenbeschichtung (1, 3) umhüllt ist.

## Claims

1. A bituminous sheet comprising a flat carrier which is provided at least on one side with a bituminous coating, **characterised in that** the bituminous coating (1, 3) contains 10 to 50 wt. % ammonium bromide.

2. A bituminous sheet according to Claim 1, **characterised in that** the proportion of ammonium bromide in the bituminous coating (1, 3) is 20 to 40 wt. %.

3. A bituminous sheet according to one of the preceding claims, **characterised in that** the bituminous coating (1, 3) contains styrene-butadiene-styrene rubber (SBS) as further additives.

4. A bituminous sheet according to Claim 3, **characterised in that** the proportion of styrene-butadiene-styrene rubber is between 5 and 20 wt. %.

5. A bituminous sheet according to one of the preceding claims, **characterised in that** the bituminous coating (1, 3) contains manufacturing oil as further additives.

6. A bituminous sheet according to one of the preceding claims, **characterised in that** the bituminous coating (1, 3) contains resin as further additives.

7. A bituminous sheet according to Claim 6, **characterised in that** the proportion of resin is between 0 and 7 wt. %.

8. A bituminous sheet according to one of Claims 1 or 2, **characterised in that** the bituminous coating (1, 3) contains atactic polypropylene (APP) as further additives.

9. A bituminous sheet according to Claim 8, **characterised in that** the proportion of atactic polypropylene is between 15 and 25 wt. %.

10. A bituminous sheet according to one of Claims 8 or 9, **characterised in that** the bituminous coating (1, 3) contains isotactic polypropylene (IPP).

11. A bituminous sheet according to Claim 10, **characterised in that** the proportion of isotactic polypropylene is between 0 and 5 wt. %.

12. A bituminous sheet according to one of the preceding claims, **characterised in that** the bituminous coating (1, 3) contains type 160/220 bitumen.

13. A bituminous sheet according to one of Claims 1 to 11, **characterised in that** the bituminous coating (1, 3) contains type 85/25 bitumen.

14. A bituminous sheet according to one of the preceding claims, **characterised in that** the weight per unit area of the bituminous sheet is a maximum of 1.5 kg/m².

15. A bituminous sheet according to one of the preceding claims, **characterised in that** the carrier (2) is provided on both sides with such a bituminous coating (1, 3).

16. A bituminous sheet according to one of Claims 1 to 5, **characterised in that** the carrier (2) is coated on all sides by such a bituminous coating (1, 3).

## Revendications

1. Bande bitumée comportant un support plan, qui est revêtu au moins sur un côté par une couche de bitume, **caractérisée en ce que** le revêtement de bitume (1, 3) contient de 10 à 50 % en poids de bromure d'ammonium.

2. Bande bitumée selon la revendication 1, **caractérisée en ce que** la teneur en bromure d'ammonium dans le revêtement de bitume (1, 3) est de 20 à 40 % en poids.

3. Bande bitumée selon l'une quelconque des revendications précédentes, **caractérisée en ce que** le revêtement de bitume (1, 3) contient du caoutchouc au styrène butadiène styrène (SBS) en tant qu'additif supplémentaire.

4. Bande bitumée selon la revendication 3, **caractérisée en ce que** la teneur en caoutchouc au styrène butadiène styrène se situe entre 5 et 20 % en poids.

5. Bande bitumée selon l'une quelconque des revendications précédentes, **caractérisée en ce que** le revêtement de bitume (1, 3) contient de l'huile de fabrication en tant qu'additif supplémentaire.

6. Bande bitumée selon l'une quelconque des revendications précédentes, **caractérisée en ce que** le revêtement de bitume (1, 3) contient une résine en tant qu'additif supplémentaire.

7. Bande bitumée selon la revendication 6, **caractérisée en ce que** la teneur en résine se situe entre 0 et 7 % en poids.

8. Bande bitumée selon la revendication 1 ou 2, **caractérisée en ce que** le revêtement de bitume (1, 3) contient du polypropylène atactique (APP) en tant qu'additif supplémentaire.

9. Bande bitumée selon la revendication 8, **caractérisée en ce que** la teneur en polypropylène atactique se situe entre 15 et 25 % en poids.

10. Bande bitumée selon la revendication 8 ou 9, **caractérisée en ce que** le revêtement de bitume (1, 3) contient du polypropylène isotactique (IPP).

11. Bande bitumée selon la revendication 10, **caractérisée en ce que** la teneur en polypropylène isotactique se situe entre 0 et 5 % en poids.

12. Bande bitumée selon l'une quelconque des revendications précédentes, **caractérisée en ce que** le revêtement de bitume (1, 3) contient du bitume du type 160/220.

13. Bande bitumée selon l'une quelconque des revendications 1 à 11, **caractérisée en ce que** le revêtement de bitume (1, 3) contient du bitume du type 85/25.

14. Bande bitumée selon l'une quelconque des revendications précédentes, **caractérisée en ce que** le poids par unité de surface de la bande bitumée est égal au maximum à 1,5 kg/m².

15. Bande bitumée selon l'une quelconque des revendications précédentes, **caractérisée en ce que** le support (2) est revêtu sur les deux faces d'un revêtement de bitume (1, 3) de ce type.

16. Bande bitumée selon l'une quelconque des revendications 1 à 5, **caractérisée en ce que** le support (2) est enveloppée de toutes parts par un revêtement de bitume (1, 3) de ce type.
